# FASCICULE DE BREVET EUROPEEN

(11) **EP 3 645 304 B1**
(45) Date de publication et mention de la délivrance du brevet: **28.07.2021**
(21) Numéro de dépôt: 18749847.2
(22) Date de dépôt: 29.06.2018
(51) Int. Cl.: B60B 21/04, B60C 15/02, B60B 25/04, B60B 25/08, B60B 25/12, B60B 21/10

(54) **ENSEMBLE ROULANT COMPORTANT UNE JANTE DONT LE REBORD FORME UN SUPPORT DE LARGEUR AXIALE ETENDUE**
ROLLENSATZ MIT EINER FELGE, DEREN FLANSCH EINE STÜTZE MIT VERGRÖSSERTER AXIALER BREITE BILDET
ROLLING ASSEMBLY HAVING A RIM, THE FLANGE OF WHICH FORMS A SUPPORT OF INCREASED AXIAL WIDTH

(30) Priorité: 30.06.2017 FR 1756170; 08.06.2018 FR 1855034
(43) Date de publication de la demande: 06.05.2020
(73) Titulaire: Compagnie Générale des Etablissements Michelin, 63000 Clermont-Ferrand (FR); Maxion Wheels U.S.A. LLC, Novi, MI 48375 (US)
(72) Inventeur: WALSER, Daniel, 63040 Clermont-Ferrand Cedex 9 (FR); VEDY, Bertrand, 63040 Clermont-Ferrand Cedex 9 (FR)
(74) Mandataire: Noel, Luminita
(86) Numéro de dépôt international: PCT/FR2018/051611
(87) Numéro de publication internationale: WO 2019/002792

(56) Documents cités:
- EP-A1- 0 125 047
- EP-A1- 0 493 569
- WO-A1-2016/046197
- WO-A1-2016/124366
- WO-A1-2018/007751

## Description

### Domaine de l'invention

L'invention a pour objet un ensemble roulant constitué par un pneumatique, une jante rigide et une liaison entre pneumatique et jante par extenseur flexible. Un pneumatique comprend, comme on le sait, deux bourrelets destinés à être montés sur des sièges. La présente invention concerne les ensembles roulants dans lesquels un bourrelet de pneumatique n'est pas monté directement sur une jante, rigide, mais est monté sur un extenseur flexible, lequel est monté sur jante.

Un pneumatique, une jante, ainsi qu'un extenseur dont il est question dans la présente invention sont usuellement décrits par une représentation dans un plan méridien, c'est-à-dire un plan contenant l'axe de rotation du pneumatique. Tous ces produits (un pneumatique, une jante, un extenseur) sont des objets ayant une géométrie de révolution par rapport à leur axe de rotation. Les directions radiale et axiale désignent respectivement les directions, la première, perpendiculaire à l'axe de rotation du pneumatique, et la seconde, parallèle à l'axe de rotation du pneumatique. Dans ce qui suit, les expressions « radialement », et « axialement » signifient respectivement « selon une direction radiale », et « selon la direction axiale ». Les expressions «radialement intérieur, respectivement radialement extérieur» signifient «plus proche, respectivement plus éloigné, de l'axe de rotation du pneumatique, selon une direction radiale ». Un plan médian est un plan perpendiculaire à l'axe de rotation du pneumatique, positionné axialement de façon à couper la surface de la bande de roulement sensiblement à mi-distance des bourrelets d'un pneumatique. Les expressions « axialement intérieur, respectivement axialement extérieur » signifient « plus proche, respectivement plus éloigné, du plan médian du pneumatique, selon la direction axiale ». Les expressions « radialement intérieur, respectivement radialement extérieur » signifient « plus proche, respectivement plus éloigné, de l'axe de rotation, selon la direction radiale ». Enfin, rappelons encore que, par « coupe radiale » ou « section radiale », on entend une coupe ou une section selon un plan qui contient l'axe de rotation de la jante (et du pneumatique dont celle-ci est équipée).

### État de la technique

Dans le document EP 0 125 047 est proposé un ensemble roulant dans lequel un bourrelet d'un pneumatique est collé sur un anneau métallique lui-même fixé sur une jante.
Dans le document WO2016/046197, il est proposé d'insérer un extenseur flexible entre un bourrelet de pneumatique et une jante. Le lecteur se reportera par exemple à la figure 5 de ce document pour prendre connaissance d'un ensemble roulant appartenant au domaine de l'invention. On y voit un ensemble roulant comprenant un pneumatique, une jante et deux extenseurs identiques. En considérant les conventions de langage rappelées ci-dessus, et en se reportant à la façon dont on monte sur une jante un tel extenseur, un tel extenseur comprend, axialement de l'intérieur vers l'extérieur, une extrémité axialement intérieure appelée bourrelet d'extenseur et destinée à assurer l'accrochage de l'extenseur sur la jante. Un tel extenseur comprend aussi une extrémité axialement extérieure destinée à recevoir et immobiliser axialement un bourrelet de pneumatique. Un corps relie les deux extrémités respectivement axialement intérieure et axialement extérieure.

Les extenseurs sont montés sur une jante qui est la plupart du temps une pièce en aluminium. La jante présente de chaque côté un crochet de jante destiné à assurer en particulier l'immobilisation axialement de l'extenseur. Une autre fonction de ce crochet de jante est d'imposer à l'extenseur une déformation de manière à former un bossage (habituellement connu pour les jantes sous la dénomination « hump ») que le pneumatique franchit au gonflage (comme pour un ensemble pneu et jante classique, sans extenseur). Ce bossage contribue à empêcher ou retarder le décoincement du pneumatique en cas d'utilisation à une pression de gonflage anormalement basse (or on sait que, en cas de décoincement, la capacité de guidage du pneumatique est très largement amoindrie et même disparait si le pneumatique quitte la jante, ce qui devient très probable).

La hauteur radiale de ce crochet de jante, pour les ensembles roulants avec extenseur, avait été choisie lors des travaux exploratoires en adoptant un crochet de type « B » tel que décrit par l'ETRTO (hauteur 14.1 mm + ou - 0.6), alors que, le plus fréquemment, les crochets pour roues de véhicules de tourisme sont de type « J » (hauteur 17.3 mm + ou - 0.6). Un tel crochet B, que l'on qualifie dans le présent mémoire de crochet haut, a certes l'avantage de contribuer à de bonnes valeurs de décoincement des ensembles pneumatiques/jantes usuels (sous faible pression), mais dans le contexte d'un montage avec extenseurs, il pose aussi des problèmes.

D'une part, le hump est suffisamment grand pour conduire à des valeurs de pression de gonflage trop grandes pour la simple mise en place du pneumatique monté sur jante avec extenseurs. D'autre part, ce crochet impose à l'extenseur une grande déformation à l'endroit où celui-ci le surplombe radialement. En effet, la forme naturelle de l'extenseur en sortie de moule, à l'état libre de toute contrainte, est sensiblement cylindrique (en fait très légèrement conique), de diamètre bien inférieur au diamètre mesuré au sommet du crochet métallique. La mise en place de l'extenseur impose donc une grande déformation locale radiale à l'extenseur. Comme à cet endroit les renforts au sein de l'extenseur sont en général de type « carcasse croisée », l'extenseur oppose à cette déformation une grande résistance. Il s'ensuit une grande pression entre l'extenseur et le crochet métallique à l'endroit du bossage comparable à un hump de jante classique.

En raison de la bonne adhérence entre le caoutchouc et l'aluminium, on comprend bien qu'une certaine partie de l'effort axial généré par le pneu sous pression et tendant à étirer axialement l'extenseur est pour partie reprise au niveau de cette interface, alors qu'on préférerait, pour assurer un montage isostatique de l'extenseur, que tout cet effort soit repris par l'appui sur le crochet métallique du talon de l'extenseur. En l'état, le fait que le positionnement de l'extenseur ne soit pas clairement défini puisque non forcément identiquement en place tout au long de son périmètre conduit à des irrégularités géométriques, elles-mêmes responsables de vibrations au roulage pour raison de non-uniformités.

Les observations du déposant l'ont ainsi amené à s'écarter des règles habituelles de construction des jantes.

### Description brève de l'invention

Cet objectif a été atteint, de manière surprenante, en s'écartant des enseignements antérieurs selon lequel le bourrelet de pneumatique ne doit pas surplomber, radialement, la jante.

L'invention a donc pour objet un ensemble roulant comprenant un pneumatique ayant deux bourrelets, une jante et au moins un extenseur flexible destiné à assurer la jonction entre l'un des bourrelets et la jante, la jante comportant un rebord de jante, ledit extenseur comprenant une extrémité axialement intérieure, une extrémité axialement extérieure et un corps orienté principalement axialement et disposé entre ladite extrémité axialement extérieure et ladite extrémité axialement intérieure, ladite extrémité axialement intérieure étant immobilisée sur ladite jante, ledit extenseur comportant un siège sur extenseur destiné à recevoir un bourrelet de pneumatique, ledit siège sur extenseur étant prolongé axialement vers l'extérieur par un épaulement immobilisant axialement ledit bourrelet de pneumatique, ledit bourrelet de pneumatique ayant une largeur axiale WB à l'interface du bourrelet avec le siège sur extenseur, caractérisé en ce que ledit rebord de jante comporte une face d'appui radialement extérieure qui s'étend axialement sous le bourrelet sur une distance S telle que le rapport S/WB est supérieur à 0,1 et inférieur à 1.

Selon l'état de la technique, les extenseurs montés sur une jante métallique forment en fait l'assise du pneu, quant à sa capacité à absorber radialement les chocs. Ils apportent plus de flexibilité radiale à l'ensemble roulant. Alors que l'on pensait ne pas pouvoir apporter une amélioration significative à cette capacité d'absorber les chocs si le bourrelet du pneumatique n'est pas axialement totalement à l'extérieur de la jante, on s'est aperçu qu'il est possible de maintenir une certaine flexibilité radiale combinée tout à la fois à une excellente endurance de l'extenseur et une amélioration des performances en tenue de route (dont on sait qu'elles sont d'autant meilleures que le pneumatique est capable de développer des poussées de dérives importantes favorables au guidage transversal rigoureux du véhicule) en organisant un basculement du bourrelet du pneumatique tout autant qu'un déplacement radialement vers l'axe de rotation de l'ensemble roulant. L'extension sous le bourrelet du pneumatique de la face d'appui radialement extérieure du rebord de jante permet effectivement une amélioration des performances de tenue de route de l'ensemble roulant relativement à des géométries d'ensemble roulant présentées par exemple dans le document cité WO2016/046197.

L'invention apporte une nouvelle fonction à la jante, à savoir, de par la portée rigide présente radialement sous la pointe du bourrelet du pneu, épousant sensiblement la forme de l'extenseur, offrir un support rigide qui impose au pneu d'amorcer un mouvement de basculement qui ne contrarie pas un déplacement radial suffisant du bourrelet lorsque l'on considère la partie de celui-ci axialement la plus à l'extérieur.

Le rapport S/WB est inférieur à 1.

En effet, au-delà de 1, l'amélioration observée dans la capacité de guidage de l'ensemble roulant n'est plus sensible et la performance de résistance aux chocs peut ne plus être aussi optimale.

De préférence, le rapport S/WB est compris entre 0,2 et 0,8 et très préférentiellement entre 0,25 et 0,75. Cela permet un bon optimum des propriétés en roulage de l'ensemble roulant tout en gardant une remarquable résistance aux chocs orientés radialement, tels les chocs trottoirs ou les nids de poule.

De préférence, la face d'appui radialement extérieure du rebord de jante comporte une portion sensiblement tronconique ; de façon avantageuse, l'angle α de ladite face d'appui tronconique est compris entre 5° et 30°.

Les observations montrent que la performance en endurance face aux chocs orientés radialement est comparable, voire meilleure, à ce qui est obtenu en appliquant les enseignements de l'état de la technique. De préférence, l'ensemble roulant comporte deux extenseurs qui assurent la jonction entre la jante de montage et les deux bourrelets du pneumatique.

Chaque extenseur est flexible ; on entend par là qu'il est déformable élastiquement en permettant, vu en coupe méridienne, une flexion et un déplacement radial sans quitter le domaine élastique, aux sollicitations de service, lors de l'usage du pneumatique gonflé à pression nominale. A noter que la déformation axiale de l'extenseur est pratiquement négligeable en fonctionnement normal du pneumatique gonflé à pression nominale.

La jante est de préférence constituée en un matériau choisi parmi l'acier ou les alliages d'aluminium et/ou de magnésium, les matériaux composites à base de fibres de carbone, de fibres de verre, de fibres d'aramide, de fibres végétales, lesdites fibres étant comprises dans une matrice à base de composés thermodurcissables ou de composés thermoplastiques, ou en un composé complexe comprenant un élastomère et un complexe à base de résine et de fibres choisies parmi les fibres de carbone, les fibres de verre, les fibres d'aramide, les fibres végétales ou parmi toutes combinaisons de matériaux.

En ce qui concerne d'autres aspects de la jante en soi ou de l'extenseur en soi, le lecteur est renvoyé aux documents WO2015/086662 et WO2016/046197 précités.

### Description des Figures

L'invention est décrite ci-après à l'aide des figures 1 à 7, données uniquement à titre d'illustration :
- la figure 1 est une coupe méridienne d'un ensemble roulant avec une jante selon l'invention,
- la figure 2 est un agrandissement de la partie gauche de l'ensemble,
- la figure 3 est une coupe méridienne, partielle, d'une jante selon l'invention,
- les figures 4 et 5 présentent un test de résistance à un choc trottoir, respectivement en vue de côté et en vue de dessus,
- la figure 6 présente des résultats de performance d'ensembles roulants selon l'invention au test de choc trottoir,
- la figure 7 est une coupe méridienne, partielle, d'un autre mode de réalisation d'une jante selon l'invention.

### Description détaillée de l'invention

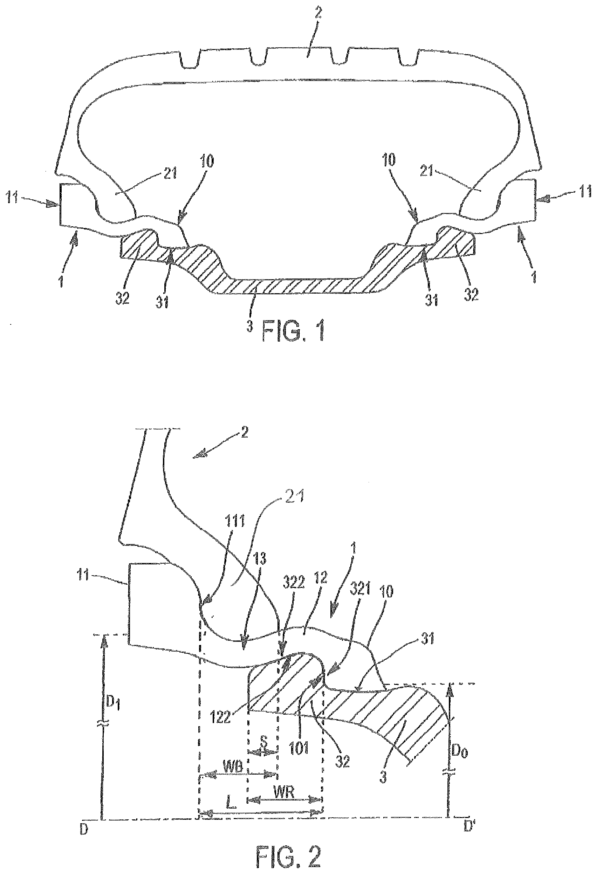

La figure 1 montre un ensemble roulant selon l'invention. Cet ensemble comprend deux extenseurs 1 identiques, un pneumatique 2 et une jante 3. Le pneumatique 2 comporte deux bourrelets 21. De façon générale, signalons que le choix de largeur de jante est tel que, compte tenu de la largeur L des extenseurs (voir figure 2), le pneumatique se trouve dans une configuration aussi semblable que possible à la configuration qu'il aurait s'il était monté directement, sans extenseurs, sur une jante appropriée.

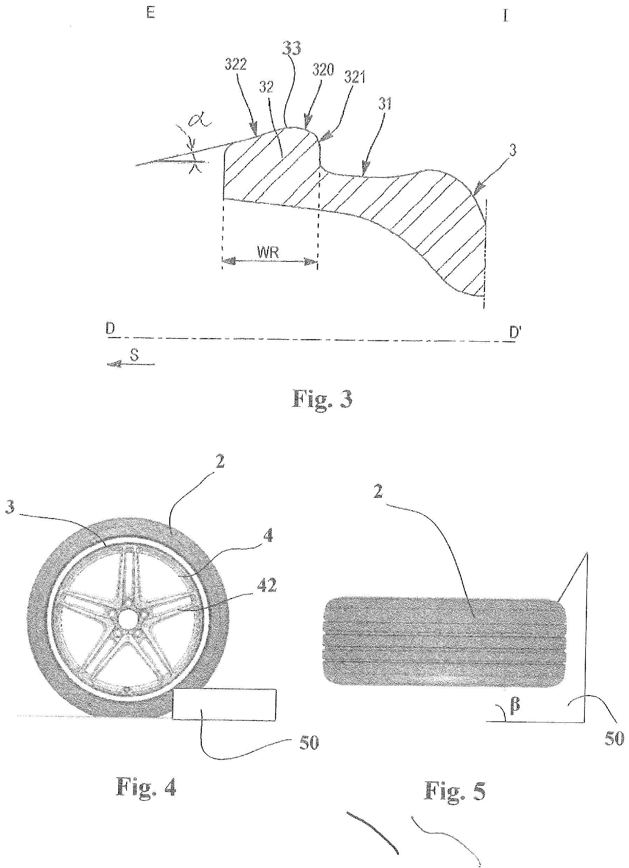

En consultant plus particulièrement la figure 3, on voit que la jante 3 comporte deux sièges sur jante 31, chacun prolongé par un rebord 32 de jante. Le rebord 32 de jante comporte une face d'appui 33 radialement extérieure destinée à servir de support au corps de l'extenseur. La face d'appui 33 du rebord de jante 32 est en contact avec l'extenseur 1 lorsque le pneumatique est monté sur les extenseurs et que ceux-ci sont montés sur la jante, le pneumatique étant gonflé à la pression nominale. Cette face d'appui 33 comporte une première portion 321 orientée sensiblement dans un plan perpendiculaire à l'axe de rotation DD' de l'ensemble roulant, et située radialement à l'extérieur par rapport audit siège sur jante 31. La face d'appui 33 du rebord 32 de jante comporte une seconde portion 322 sensiblement tronconique, située axialement à l'extérieur par rapport à ladite première portion 321 et située au moins en partie radialement à l'extérieur par rapport audit siège sur jante 31, ladite seconde portion 322 est sensiblement tronconique, d'angle α valant 15°. La face d'appui 33 comprend aussi une portion de raccordement 320 entre ladite première portion 321 et ladite seconde portion 322. Dans l'exemple représenté, la largeur axiale WR du rebord de jante 32 est de 18,3 mm.

Les repères E et I à la figure 3 indiquent le côté axialement extérieur de la jante, respectivement le côté axialement intérieur. La seconde portion 322 est inclinée axialement vers l'extérieur : ainsi, en la prolongeant axialement vers l'extérieur, on rejoint l'axe DD' (position non à l'échelle par rapport à la jante 3) en un sommet virtuel S rejeté axialement très loin vers l'extérieur, ce qui est symbolisé par une flèche sous S à la figure 3.

L'invention peut être utilisée avec de nombreuses variantes de constitution interne du pneumatique 2, qui ne sont donc pas représentées, ainsi qu'avec de nombreuses variantes de constitution interne d'extenseur 1, qui ne sont donc pas représentées.

En revenant à la figure 2, on voit que chaque extenseur 1 comporte une extrémité axialement intérieure 10 destinée à être montée sur l'un desdits sièges sur jante 31. Il comporte une extrémité axialement extérieure 11 ainsi qu'un corps 12 orienté sensiblement axialement et disposé entre ladite extrémité axialement extérieure 11 et ladite extrémité axialement intérieure 10. Le corps 12 a une face radialement intérieure 122. L'extrémité axialement intérieure 10 de l'extenseur a une face de positionnement axial 101 sensiblement perpendiculaire à l'axe de rotation DD', et est immobilisée en étant plaquée axialement contre le rebord 32 de jante, sous l'effet de la pression de gonflage de l'ensemble roulant. L'extrémité axialement extérieure 11 présente un épaulement 111 formant en partie une face sensiblement perpendiculaire à l'axe de rotation DD'. Ledit extenseur 1 comporte un siège sur extenseur 13. Le bourrelet 21 a une largeur axiale WB à l'interface du bourrelet 21 avec le siège sur extenseur 13. Le bourrelet 21 est immobilisé en étant plaqué axialement contre ladite extrémité axialement extérieure 11 de l'extenseur, sous l'effet de la pression de gonflage de l'ensemble roulant.

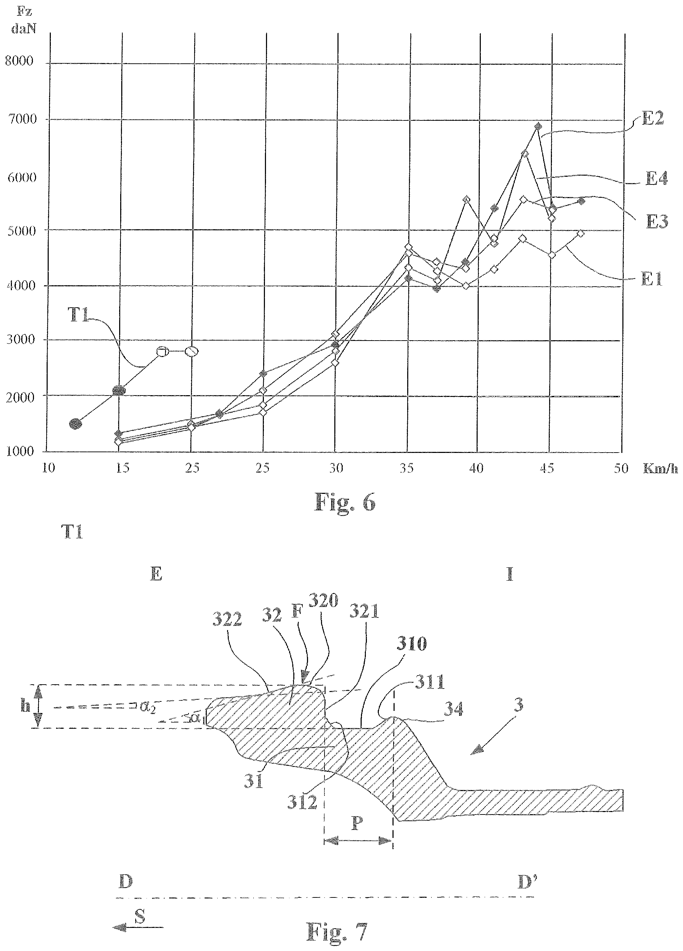

En prolongeant la trace de l'épaulement 111 de l'extrémité axialement extérieure 11 radialement vers l'intérieur et en prolongeant la trace du siège sur extenseur 13, on obtient un point qui est la trace d'un cercle de diamètre D₁, diamètre qui lui-même correspond au diamètre normalisé du pneumatique de l'ensemble roulant utilisant l'extenseur 1 selon l'invention. En prolongeant la trace de la face de positionnement axial 101 radialement vers l'intérieur et en prolongeant la trace du siège sur jante 31, on obtient un point qui est la trace d'un cercle de diamètre D₀ qui est le diamètre normalisé du siège sur jante 31. Pour une information sur les normes auquel il est fait référence, le lecteur consultera la documentation de l'ETRTO (European Tyre and Rim Technical Organisation). La hauteur du rebord de jante mesurée entre d'une part le point d'intersection entre la trace du siège de jante 31 et la trace de la portion radiale 321 du rebord 32 et d'autre part le point F radialement le plus extérieur du rebord 32 est de 8,5 mm (voir figure 7). Cela permet d'obtenir un bossage de l'extenseur approprié au maintien du bourrelet du pneumatique sur le siège sur extenseur sans entraîner de contraintes trop élevées dans la structure de l'extenseur.

Une fois le montage effectué, le bourrelet du pneumatique impose une contraction circonférentielle de l'extenseur 1. Le rebord 32 de jante s'étend axialement sous le bourrelet 21 sur une distance S telle que le rapport S/WB est égal à 0,3. Ainsi, on voit que la face radialement intérieure 122 s'appuie sur la face d'appui radialement extérieure 33 du rebord de jante 32 sur toute sa largeur axiale WR, laquelle vaut 18,3 mm et est bien plus importante que dans les réalisations connues, ce qui contraint le bourrelet 21 du pneumatique à basculer dans un mouvement de rotation (dans le sens trigonométrique pour le côté du pneumatique 2 représenté à la figure 2) lorsqu'il subit une augmentation de charge radiale significative.

La figure 7 présente en coupe méridienne partielle un mode de réalisation alternatif d'une jante selon l'un des objets de l'invention. Les références identiques correspondent à des parties identiques ou similaires.

Cette jante 3 se différencie de celle illustrée à la figure 3 par un siège de jante 310 sensiblement cylindrique entre deux zones de transition 311 et 312 et une largeur axiale P fortement réduite, de l'ordre de 15,3 mm. Ces deux modifications permettent de bloquer en position de service le bourrelet d'extenseur de l'extenseur 1 dès son montage sur la jante sans devoir compter sur la pression de gonflage de l'ensemble roulant au moment du montage du pneumatique sur l'ensemble jante et extenseur.

La résistance aux chocs trottoir a été quantifiée en faisant passer les ensembles roulants sur un trottoir 50 de 90 mm de haut avec un angle β de 60° par rapport à la direction d'avancement du pneumatique (un angle de 90° correspondant à une direction perpendiculaire à la direction d'avancement du pneumatique, voir figures 4 et 5) ; le bord du trottoir a un rayon de courbure de 10 mm ; on effectue des passages successifs à des vitesses différentes jusqu'à ce que le pneumatique perde sa pression de gonflage ou jusqu'à ce que le pneumatique ou l'extenseur ou la roue se déforme de façon permanente et on fait l'acquisition pour chaque passage des efforts transmis au trottoir et/ou au moyeu sur le véhicule. On compare un ensemble de référence à un ensemble selon l'invention. L'ensemble de référence T1 est un ensemble classique sans extenseur comportant un pneumatique 245/35 R 20 de type MICHELIN ® PS4S, et une jante de largeur valant 8 pouces, le rebord étant celui du crochet J. Comme le montre la figure 4, les roues 4 des ensembles roulants testés sont des roues à rayons 42.

Quatre ensembles roulants comportant des extenseurs ont été testés avec des valeurs du rapport S/WB variables :
- Le premier E1, avec une jante telle que présentée à la figure 3 a un rapport S/WB égal à 0,27 ;
- Le deuxième E2 avec une jante telle que présentée à la figure 7 a un rapport S/WB égal à 0,27 ;
- Le troisième E3 avec une jante telle que présentée à la figure 7 a un rapport S/WB égal à 0,49 ; et
- Le quatrième E4 avec une jante telle que présentée à la figure 7 a un rapport S/WB égal à 0,70.

Les résultats des essais de choc trottoir sont présentés à la figure 6.

Le graphe de la figure 6 présente en abscisses la vitesse d'avancement du pneumatique en km/h et en ordonnées la valeur maximale de l'effort radial mesuré au sol lors du choc exprimé en daN.

L'ensemble roulant témoin T1 sans extenseurs présente une soufflure du flanc dès l'essai à 18 km/h et une crevaison dès 20 km/h.

Pour les quatre ensembles roulants comportant des extenseurs, dans toute la gamme de vitesses testées, aucun pneumatique n'a présenté de dommage bien que les valeurs maximales des efforts radiaux augmentent très sensiblement avec la vitesse.

Il est à noter que les valeurs maximales des efforts radiaux sont notablement différentes en fonction de l'endroit du choc sur la roue. Fz est plus élevée si le choc se porte sur un rayon de la roue relativement à un choc entre deux rayons.

En conséquence, il n'est pas possible de différencier les résultats pour ces quatre ensembles, on note cependant que l'augmentation du rapport S/WB ne diminue pas la résistance de l'ensemble roulant aux chocs trottoir même si une augmentation des efforts radiaux semble se dessiner avec l'augmentation de la valeur du rapport S/WB.

Pour l'ensemble roulant E1, on a noté une déformation permanente de la roue à l'endroit du choc dès 42 km/h. La meilleure résistance des trois autres ensembles roulants selon l'invention peut être liée à la modification de la géométrie du rebord de jante ainsi qu'à l'extension vers l'extérieur du rebord de jante.

En revanche, lors d'essais de comportement on a noté une amélioration sensible de la précision de conduite avec l'augmentation du rapport S/WB.

L'ensemble roulant selon l'invention permet donc d'améliorer de manière très notable le guidage véhicule tout en maintenant une très bonne capacité de résistance aux chocs.

## Revendications

1. Ensemble roulant comprenant un pneumatique (2) ayant deux bourrelets (21), une jante (3) et au moins un extenseur (1) flexible destiné à assurer la jonction entre l'un des bourrelets (21) et la jante (3), la jante comportant un rebord (32) de jante, ledit extenseur (1) comprenant une extrémité axialement intérieure (10), une extrémité axialement extérieure (11) et un corps (12) orienté principalement axialement et disposé entre ladite extrémité axialement extérieure (11) et ladite extrémité axialement intérieure (10), ladite extrémité axialement intérieure (10) étant immobilisée sur ladite jante, ledit extenseur (1) comportant un siège sur extenseur (13) destiné à recevoir un bourrelet (21) de pneumatique (2), ledit siège sur extenseur (13) étant prolongé axialement vers l'extérieur par un épaulement (111) immobilisant axialement ledit bourrelet (21) de pneumatique (2), ledit bourrelet (21) de pneumatique (2) ayant une largeur axiale WB à l'interface du bourrelet (21) avec le siège sur extenseur (13), ledit rebord (32) de jante comporte une face d'appui radialement extérieure (33) qui s'étend axialement sous le bourrelet (21) sur une distance S telle que le rapport S/WB est supérieur à 0,1, **caractérisé en ce que** le rapport S/WB est inférieur à 1.

2. Ensemble roulant selon la revendication 1, dans lequel le rapport S/WB est compris entre 0,2 et 0,8.

3. Ensemble roulant selon l'une des revendications précédentes, dans lequel le rapport S/WB est compris entre 0,25 et 0,75.

4. Ensemble roulant selon l'une des revendications précédentes, dans lequel ladite jante (3) comporte un siège sur jante (31), lequel siège sur jante (31) étant prolongé axialement vers l'extérieur par ledit rebord de jante (32), et dans lequel ladite extrémité axialement intérieure (10) dudit extenseur est immobilisée en étant plaquée axialement contre ledit rebord (32) de jante.

5. Ensemble roulant selon l'une des revendications précédentes dans lequel, la face d'appui radialement extérieure (322) dudit rebord (32) de la jante (3) comporte une portion (322) sensiblement tronconique.

6. Ensemble roulant selon la revendication 5, dans lequel l'orientation de ladite face d'appui tronconique est telle que le sommet virtuel (S) déterminé en prolongeant les faces tronconiques est situé axialement à l'extérieur.

7. Ensemble roulant selon la revendication 6, dans lequel l'angle α de ladite face tronconique est compris entre 5° et 30°.

8. Ensemble roulant selon l'une quelconque des revendications précédentes, comportant deux extenseurs (1) identiques.

## Patentansprüche

1. Rollanordnung, umfassend einen Luftreifen (2), der zwei Wülste (21), eine Felge (3) und mindestens einen flexiblen Expander (1) aufweist, der dazu bestimmt ist, den Anschluss zwischen einer der Wülste (21) und der Felge (3) zu gewährleisten, wobei die Felge einen Felgenrand (32) aufweist, wobei der Expander (1) ein axial inneres Ende (10), ein axial äußeres Ende (11) und einen Körper (12) umfasst, der hauptsächlich axial ausgerichtet und zwischen dem axial äußeren Ende (11) und dem axial inneren Ende (10) angeordnet ist, wobei das axial innere Ende (10) auf der Felge festgelegt ist, wobei der Expander (1) einen Expandersitz (13) aufweist, der dazu bestimmt ist, eine Wulst (21) des Luftreifens (2) aufzunehmen, wobei der Expandersitz (13) durch eine Schulter (111) axial nach außen verlängert ist, die die Wulst (21) des Luftreifens (2) axial festlegt, wobei die Wulst (21) des Luftreifens (2) an der Schnittstelle der Wulst (21) mit dem Expandersitz (13) eine axiale Breite WB hat, wobei der Felgenrand (32) eine radial äußere Anlagefläche (33) aufweist, die sich über eine Strecke S axial unter der Wulst (21) erstreckt, so dass das Verhältnis von S/WB größer 0,1 ist,
**dadurch gekennzeichnet, dass** das Verhältnis von S/WB kleiner 1 ist.

2. Rollanordnung nach Anspruch 1, wobei das Verhältnis von S/WB zwischen 0,2 und 0,8 liegt.

3. Rollanordnung nach einem der vorhergehenden Ansprüche, wobei das Verhältnis von S/WB zwischen 0,25 und 0,75 liegt.

4. Rollanordnung nach einem der vorhergehenden Ansprüche, wobei die Felge (3) einen Felgensitz (31) aufweist, wobei der Felgensitz (31) durch den Felgenrand (32) axial nach außen verlängert ist, und wobei das axial innere Ende (10) des Expanders festgelegt ist, indem es axial gegen den Felgenrand (32) gedrückt ist.

5. Rollanordnung nach einem der vorhergehenden Ansprüche, wobei die radial äußere Anlagefläche (322) des Rands (32) der Felge (3) einen im Wesentlichen kegelstumpfförmigen Abschnitt (322) aufweist.

6. Rollanordnung nach Anspruch 5, wobei die Ausrichtung der kegelstumpfförmigen Anlagefläche derart ist, dass sich der durch Verlängerung der kegelstumpfförmigen Flächen bestimmte virtuelle Scheitel (S) axial außerhalb befindet.

7. Rollanordnung nach Anspruch 6, wobei der Winkel α der kegelstumpfförmigen Fläche zwischen 5° und 30° beträgt.

8. Rollanordnung nach einem der vorhergehenden Ansprüche, aufweisend zwei identische Expander (1).

## Claims

1. Rolling assembly comprising a tyre (2) having two beads (21), a rim (3) and at least one flexible extender (1) intended to provide the connection between one of the beads (21) and the rim (3), the rim having a rim flange (32), said extender (1) comprising an axially inner end (10), an axially outer end (11) and a body (12) that is oriented mainly axially and is disposed between said axially outer end (11) and said axially inner end (10), said axially inner end (10) being fixed in place on said rim, said extender (1) having an extender seat (13) intended to receive a tyre (2) bead (21), said extender seat (13) being extended axially towards the outside by a shoulder (111) that axially fixes said tyre (2) bead (21) in place, said tyre (2) bead (21) having an axial width WB at the interface of the bead (21) with the extender seat (13), said rim flange (32) has a radially outer bearing face (33) that extends axially under the bead (21) by a distance S such that the ratio S/WB is greater than 0.1 **characterized in that** the ratio S/WB is less than 1.

2. Rolling assembly according to claim 1, wherein the ratio S/WB is between 0.2 and 0.8.

3. Rolling assembly according to one of the preceding claims, wherein the ratio S/WB is between 0.25 and 0.75.

4. Rolling assembly according to any one of the preceding claims, wherein said rim (3) has a rim seat (31), said rim seat (31) being extended axially towards the outside by said rim flange (32), and wherein said axially inner end (10) of said extender is fixed in place by being pressed axially against said rim flange (32).

5. Rolling assembly according to one of the preceding claims, wherein the radially outer bearing face (322) of said rim (3) flange (32) has a substantially frustoconical portion (322).

6. Rolling assembly according to Claim 5, wherein the orientation of said frustoconical bearing face is such that the virtual vertex (S) determined by extending the frustoconical faces is situated axially on the outside.

7. Rolling assembly according to Claim 6, wherein the angle α of said frustoconical bearing face is between 5° and 30°.

8. Rolling assembly according to any one of the preceding claims, which has two identical extenders (1).
